# EUROPEAN PATENT SPECIFICATION

(11) **EP 1 500 800 B1**
(45) Date of publication and mention of the grant of the patent: **19.04.2006**
(21) Application number: 04024926.0
(22) Date of filing: 19.07.2001
(51) Int. Cl.: F01N 3/08, F01N 3/20, F01N 9/00, B01D 46/00, B01D 53/04, F01N 11/00, F02D 41/02

(54) **Emission control system and method of internal combustion engine**
Emissionskontrollsystem und Methode für einen Verbrennungsmotor
Système et méthode de contrôle des émissions d'un moteur à combustion interne

(30) Priority: 21.07.2000 JP 2000221548
(43) Date of publication of application: 26.01.2005
(62) Divisional of application: 01117473.7
(73) Proprietor: Toyota Jidosha Kabushiki Kaisha, Toyota-shi, Aichi 471-8571 (JP)
(72) Inventor: Kobayashi, Masaaki, Toyota-shi Aichi 471-8571 (JP); Matsushita, Souichi, Toyota-shi Aichi 471-8571 (JP); Tsukasaki, Yukihiro, Toyota-shi Aichi 471-8571 (JP); Matsuoka, Hiroki, Toyota-shi Aichi 471-8571 (JP); Hayashi, Kotaro, Toyota-shi Aichi 471-8571 (JP); Ishiyama, Shinobu, Toyota-shi Aichi 471-8571 (JP); Ohtsubo, Yasuhiko, Toyota-shi Aichi 471-8571 (JP); Magarida, Naofumi, Toyota-shi Aichi 471-8571 (JP); Shibata, Daisuke, Toyota-shi Aichi 471-8571 (JP); Negami, Akihiko, Toyota-shi Aichi 471-8571 (JP); Oda, Tomihisa, Toyota-shi Aichi 471-8571 (JP); Harada, Yasuo, Toyota-shi Aichi 471-8571 (JP); Ono, Tomoyuki, Toyota-shi Aichi 471-8571 (JP)
(74) Representative: TBK-Patent

(56) References cited:
- EP-A- 0 761 286
- EP-A- 0 862 941
- WO-A-00/08311
- PATENT ABSTRACTS OF JAPAN vol. 018, no. 691 (M-1731), 26 December 1994 (1994-12-26) & JP 06 272541 A (TOYOTA MOTOR CORP), 27 September 1994 (1994-09-27)

## Description

### BACKGROUND OF THE INVENTION

### 1. Field of the Invention

The invention relates in general to an emission control system for an internal combustion engine, and more particularly to such an emission control system including means for removing nitrogen oxides (hereinafter referred to as "NOx" where appropriate) contained in exhaust gases emitted from the internal combustion engine, and means for removing particulate matters contained in the exhaust gases and to a method for controlling such an emission control system.

### 2. Description of Related Art

Known types of emission control systems for purifying exhaust gas emitted from internal combustion engines use a catalytic converter incorporating a catalyst, and/or a particulate filter for removing particulates, including soot and so-called particulate matters, such as unburned fuel components, contained in the exhaust gas. The catalytic converter incorporates within its casing a lean NOx catalyst, a three-way catalyst, or other types of catalyst.

The lean NOx catalyst indicated above is capable of purifying exhaust gases emitted from internal combustion engines of compression ignition type or lean-burn type, including, for example, diesel engines and lean-burn gasoline engines. Examples of the NOx catalyst include a selective-reduction type NOx catalyst and an occlusion-reduction type NOx catalyst.

Discussed in more detail, the occlusion-reduction type NOx catalyst includes (a) a support formed of, for example, alumina (Al₂Oₐ), (b) at least one element carried on the support and selected from alkali metals such as potassium (K), sodium (Na), lithium (Li) and cesium (Cs), alkali earth metals such as barium (Ba) and calcium (Ca), and rare earth metals such as lanthanum (La) and yttrium (Y), and (c) at least one noble metal such as platinum (Pt) also carried on the support.

The occlusion-reduction type NOx catalyst is capable of absorbing NOx when the air-fuel ratio of an exhaust gas that enters the NOx catalyst is fuel-lean, and is capable of releasing the absorbed NOx when the oxygen concentration of the exhaust gas is lower than a given limit. Thus, the occlusion-reduction type NOx catalyst functions to absorb and release NOx.

In the internal combustion engine of compression ignition type or lean-burn type as indicated above, the exhaust gas emitted in a normal operation of the engine is fuel-lean, namely, the air/fuel ratio of the exhaust gas (hereinafter referred to as "exhaust air/fuel ratio") is higher than the stoichiometric value. Therefore, the NOx in the exhaust gas is absorbed by the NOx catalyst of the occlusion-reduction type when it is used for an emission control system for the internal combustion engine of the compression ignition type or lean-burn type. However, the NOx occluding ability of the NOx catalyst is limited, and is eventually saturated or disabled to continuously function to absorb NOx, resulting in releasing of NOx into the atmosphere without purification.

Tb prevent the releasing of NOx into the atmosphere, it is required to recover the original NOx occluding ability of the occlusion-reduction type NOx catalyst. To this end, the NOx which has been absorbed in the NOx catalyst must be released so that the NOx catalyst is restored to the initial state.

To effect the recovery of the NOx occluding ability of the occlusion-reduction type (hereinafter referred to as "regeneration of the occlusion-reduction type NOx catalyst), the NOx is released from the NOx catalyst by making the exhaust gas fuel-rich to thereby extremely reduce the oxygen concentration of the exhaust gas entering the NOx catalyst. The exhaust gas is made fuel-rich in predetermined timing before the NOx catalyst is saturated with the NOx.

Although the mere releasing of the NOx permits the regeneration of the occlusion-reduction type NOx catalyst, this releasing of the NOx does not lead to removal of the NOx, which is the very function that should be performed by the NOx catalyst. Moreover, the releasing of the NOx results in deterioration of the emission from the internal combustion engine. In view of this, the fuel is continuously or intermittently injected through a nozzle provided at the exhaust port, depending upon the operating state of the internal combustion engine, so that the injected fuel functions as a reducing agent to be added to an NOx absorbent of the NOx catalyst, for reducing the released NOx into N₂, to thereby remove the released NOx.

By the way, the exhaust gas emitted from the engine by combustion of the fuel also contains sulfur oxides (hereinafter referred to as "SOx" where appropriate), since the fuel includes a sulfur component. The SOx is absorbed by the NOx catalyst of the occlusion-reduction type, by the same mechanism by which the NOx is absorbed. The NOx removal capability or efficiency of the NOx catalyst is reduced by the amount of the SOx absorbed in the NOx catalyst. That is, the occlusion-reduction type NOx catalyst suffers from so-called "S poisoning", which is deterioration of the NOx removing function of the NOx catalyst due to the absorption of the SOx. The NOx catalyst suffering from the S poisoning must also be recovered. A treatment to recover the SOx-poisoned NOx catalyst will be referred to as an S-poisoning recovery process.

To implement the S-poisoning recovery process, the exhaust gas that is fed to the NOx catalyst is made stoichiometric or fuel-rich, and the temperature of the NOx catalyst is raised to about 600-700°C. The NOx catalyst is heated to such a high temperature, since the SOx is more difficult to be released than the NOx.

In the diesel engine of compression ignition type, on the other hand, it is known to provide a particulate filter in an exhaust passage of the diesel engine, for trapping or collecting particulate matters contained in the exhaust gas, thereby to remove the particular matters.

To prevent clogging or plugging of the particulate filter with the particulate matters stored therein, the particulate matters need to be removed from the particulate filter. A treatment to restore the particulate filter to its initial state in which the particulate matters are not contained therein is called "particulate filter regeneration process". The particulate filter regeneration is performed by burning the particulate matters. The particulate matters may be burned at an elevated temperature, for example, at a temperature not lower than about 500°C.

There is also known a technique to provide the particulate filter with a catalyst, for removing harmful components, such as hydrocarbon (HC), carbon monoxide (CO) and nitrogen oxides (NOx), contained in exhaust gas, as well as simultaneously removing the particulate matters. The particulate filter provided with the catalyst is called "catalyst-carrying particulate filter".

However, the catalyst-carrying particulate filter is disabled to achieve its function of removing particulate matters if the filter is not placed at a temperature of about 500°C or higher. Generally, the particulate matters collected by the particulate filter are ignited and burned provided that the temperature of the filter is about 500°C or higher. Below this temperature, the collected particulate matters gradually accumulate on the surface of the particulate filter, since the catalyst-carrying particulate filter is a simply a combination of the particulate filter and the catalyst. As a result, the catalyst-carrying particulate filter is clogged with the particulate matters unless the filter is exposed to a hot exhaust gas of about 500°C or higher.

The temperature of the exhaust gas usually emitted from the diesel engine is lower than 500°C. Therefore, the temperature of the catalyst-carrying particulate filter is required to be positively raised to about 500°C or higher, by some heating means other than the hot exhaust gas usually emitted from the diesel engine. In this respect, it is noted that the temperature of the hot exhaust gas usually emitted from the diesel engine is not high enough to permit the S-poisoning recovery process, which can be achieved at a higher temperature of about 600-700°C.

JP-A-10-306717 discloses an example of a technique for raising the temperature of the exhaust gas to a level high enough to permit the S-poisoning recovery process, in view of the above circumstances.

If the catalyst-carrying particular filter is exposed to the fuel-rich exhaust gas whose temperature is high enough to permit the S-poisoning recovery process while the particulate matters are accumulated on the catalyst-carrying particulate filter, the particulate matters are instantaneously burned out since the temperature at which the particulate matters are normally burned is lower than the temperature required for performing the S-poisoning recovery process. In addition, the particulate filter may be heated to an unnecessarily high temperature, with a large amount of thermal energy being produced as a result of burning of a large amount of the particulate matters accumulated on the filter. As a result, the catalyst-carrying particulate filter may deteriorate due to exposure to the thermal energy, resulting in a risk of deterioration of the NOx reducing ability of the catalyst.

### SUMMARY OF THE INVENTION

It is therefore an object of the invention to provide an emission control system for an internal combustion engine, which includes a catalyst-carrying particulate filter from which particulate matters, such as soot, are removed so that burning of the particulate matters is restricted, thereby preventing thermal deterioration of the catalyst-carrying particulate filter.

The object is obtained by an emission control system according to claim 1, and by a method according to claim 3.

Advantageous modifications are carried out according to the depending claims.

According to an aspect of the invention an emission control system for an internal combustion engine is provided which comprises: (a) a filter that collects particulates contained in an exhaust gas, and carries an NOx absorbent thereon, the NOx absorbent absorbing NOx contained in the exhaust gas when an air-fuel ratio of the exhaust gas is lean, and releasing the absorbed NOx when an oxygen concentration of the exhaust gas is reduced; (b) filter regenerating means for regenerating the filter by removing the particulates accumulated on the filter; (c) S-poisoning determining means for determining whether the NOx absorbent is in a condition of S poisoning due to absorption of SOx contained in the exhaust gas, in addition to the NOx; and (d) S-poisoning recovery means for recovering the NOx absorbent from S poisoning. In this emission control system, when the S-poisoning determining means determines that the NOx absorbent is in the condition of S poisoning, the filter regenerating means is activated to remove the particulates, and the S-poisoning recovery means is then activated to recover the NOx absorbent from S poisoning after removal of the particulates.

In the emission control system constructed as described above, when the S-poisoning determining means determines that the NOx absorbent is in the condition of S poisoning, the filter regenerating means is first activated to remove the particulates, and the S-poisoning recover means is then activated to recover the NOx absorbent from S poisoning after the removal of the particulates is finished. With this arrangement, when the NOx absorbent needs to recover from S poisoning, the recovery process starts only after the particulates are removed. During the S-poisoning recovery process, therefore, the temperature of the particulate filter does not rise due to burning of the particulates, and the filter does not deteriorate due to heat generated by the burning of the particulates.

### BRIEF DESCRIPTION OF THE DRAWINGS

The above object, as well as features, advantages, and technical and industrial significance of this invention will be better understood by reading the following detailed description of exemplary embodiments of the invention, when considered in connection with the accompanying drawings, in which:

An emission control system for an internal combustion engine, comprising:
a filter that collects particulates contained in an exhaust gas, and carries an NOx absorbent thereon, the NOx absorbent absorbing NOx contained in the exhaust gas when an air-fuel ratio of the exhaust gas is lean, and releasing the absorbed NOx when an oxygen concentration of the exhaust gas is reduced;
filter regenerating means for regenerating the filter by removing the particulates accumulated on the filter; S-poisoning determining means for determining whether the NOx absorbent is in a condition of S poisoning due to absorption of SOx contained in the exhaust gas, in addition to the NOx; and
S-poisoning recovery means for recovering the NOx absorbent from S poisoning, wherein
when the S-poisoning determining means determines that the NOx absorbent is in the condition of S poisoning, the filter regenerating means is activated to remove the particulates, and the S-poisoning recovery means is then activated to recover the NOx absorbent from S poisoning after removal of the particulates.

An emission control system for an internal combustion engine, comprising:
a filter that collects particulates contained in an exhaust gas, and carries an NOx absorbent thereon, the NOx absorbent absorbing NOx contained in the exhaust gas when an air-fuel ratio of the exhaust gas is lean, and releasing the absorbed NOx when an oxygen concentration of the exhaust gas is reduced;
filter regenerating means for regenerating the filter by removing the particulates accumulated on the filter;
S-poisoning determining means for determining whether the NOx absorbent is in a condition of S poisoning due to absorption of SOx contained in the exhaust gas, in addition to the NOx; and
temperature rise control means for controlling a temperature rise of the filter based on a state of removal of the particulates by the filter regenerating means, when the S-poisoning determining means determines that the NOx absorbent is in the condition of S poisoning.

An emission control system for an internal combustion engine, comprising:
a filter that collects particulates contained in an exhaust gas, and carries an NOx absorbent thereon, the NOx absorbent absorbing NOx contained in the exhaust gas when an air-fuel ratio of the exhaust gas is lean, and releasing the absorbed NOx when an oxygen concentration of the exhaust gas is reduced;
filter regenerating means for regenerating the filter by removing the particulates accumulated on the filter;
S-poisoning determining means for determining whether the NOx absorbent is in a condition of S poisoning due to absorption of SOx contained in the exhaust gas, in addition to the NOx; and
temperature-increase-rate control means for controlling a rate of increase of a temperature of the filter based on an amount of the particulates accumulated on the filter, when the S-poisoning determining means determines that the NOx absorbent is in the condition of S poisoning.

An emission control system, wherein the temperature-increase-rate control means controls the rate of increase of the temperature of the filter such that the rate of increase is inversely proportional to the amount of the particulates accumulated on the filter.

An emission control system for an internal combustion engine, comprising:
a filter that collects particulates contained in an exhaust gas, and carries an NOx absorbent thereon, the NOx absorbent absorbing NOx contained in the exhaust gas when an air-fuel ratio of the exhaust gas is lean, and releasing the absorbed NOx when an oxygen concentration of the exhaust gas is reduced;
filter regenerating means for regenerating the filter by removing the particulates accumulated on the filter;
S-poisoning determining means for determining whether the NOx absorbent is in a condition of S poisoning due to absorption of SOx contained in the exhaust gas, in addition to the NOx;
reductant supplying means for supplying a reducing agent for reducing NOx, toward the filter that carries the NOx absorbent; and
reductant supply-amount control means for controlling a supply amount of the reducing agent, such that when the S-poisoning determining means determines that an amount of SOx absorbed in the NOx absorbent is greater than a predetermined value, a first amount of the reducing agent is supplied from the reductant supplying means until a temperature of the filter reaches a predetermined level, and such that a second amount of the reducing agent that is larger than the first amount is supplied from the reductant supplying means after the temperature of the filter reaches the predetermined level.

An emission control system for an internal combustion engine, comprising:
a filter that collects particulates contained in an exhaust gas, and carries an NOx absorbent thereon, the NOx absorbent absorbing NOx contained in the exhaust gas when an air-fuel ratio of the exhaust gas is lean, and releasing the absorbed NOx when an oxygen concentration of the exhaust gas is reduced;
particulate-amount estimating means for estimating an amount of the particulates accumulated on the filter;
S-poisoning recovery means for recovering the NOx absorbent from S poisoning when the NOx absorbent is in a condition of S poisoning due to absorption of SOx contained in the exhaust gas, in addition to the NOx; and
recovery process terminating means for terminating an S-poisoning recovery process effected by the S-poisoning recovery means, when the amount of the accumulated particulates detected by the particulate-amount detecting means is larger than a predetermined value.

An emission control system for an internal combustion engine, comprising:
a filter that collects particulates contained in an exhaust gas, and carries an NOx absorbent thereon, the NOx absorbent absorbing NOx contained in the exhaust gas when an air-fuel ratio of the exhaust gas is lean, and releasing the absorbed NOx when an oxygen concentration of the exhaust gas is reduced;
S-poisoning determining means for determining whether the NOx absorbent is in a condition of S poisoning due to absorption of SOx contained in the exhaust gas, in addition to the NOx;
particulate-amount estimating means for estimating an amount of the particulates accumulated on the filter, when the S-poisoning determining means determines that the NOx absorbent is in the condition of S poisoning;
instantaneous target temperature calculating means for calculating an instantaneous target temperature based on the amount of the particulates estimated by the particulate-amount estimating means, such that a temperature of the filter can be raised to the instantaneous target temperature without causing thermal deterioration of the filter even if all of the accumulated particulates are burned out;
means for raising the temperature of the filter for a predetermined period of time if the instantaneous target temperature is lower than a final target temperature at which a process to recover the NOx absorbent from S poisoning can be carried out.

An emission control system, wherein the particulate-amount estimating means estimates the amount of the particulates accumulated on the filter, based on at least an actual pressure difference across the filter, and a predicted pressure difference across the filter which is predicted based on an exhaust gas temperature measured downstream of the filter and an intake air quantity.

An emission control system, wherein the instantaneous target temperature calculating means calculates the instantaneous target temperature, taking account of a thermal energy generated by burning of all of the particulates accumulated on the filter, and a temperature rise of the filter resulting from the thermal energy.

A method for controlling an emission control system for an internal combustion engine, which includes a filter that collects particulates contained in an exhaust gas, and carries an NOx absorbent thereon, the NOx absorbent absorbing NOx contained in the exhaust gas when an air-fuel ratio of the exhaust gas is lean, and releasing the absorbed NOx when an oxygen concentration of the exhaust gas is reduced, comprising the steps of:
regenerating the filter by removing the particulates accumulated on the filter;
determining whether the NOx absorbent is in a condition of S poisoning due to absorption of SOx contained in the exhaust gas, in addition to the NOx; and
recovering the NOx absorbent from S poisoning, wherein when it is determined that the NOx absorbent is in the condition of S poisoning, the step of regenerating the filter is executed to remove the particulates, and the step of recovering the NOx absorbent is then activated to recover the NOx absorbent from S poisoning after removal of the particulates.

A method for controlling an emission control system for an internal combustion engine, which includes a filter that collects particulates contained in an exhaust gas, and carries an NOx absorbent thereon, the NOx absorbent absorbing NOx contained in the exhaust gas when an air-fuel ratio of the exhaust gas is lean, and releasing the absorbed NOx when an oxygen concentration of the exhaust gas is reduced, comprising the steps of:
regenerating the filter by removing the particulates accumulated on the filter;
determining whether the NOx absorbent is in a condition of S poisoning due to absorption of SOx contained in the exhaust gas, in addition to the NOx; and
controlling a temperature rise of the filter based on a state of removal of the particulates, when it is determined that the NOx absorbent is in the condition of S poisoning.

A method for controlling an emission control system for an internal combustion engine, which includes a filter that collects particulates contained in an exhaust gas, and carries an NOx absorbent thereon, the NOx absorbent absorbing NOx contained in the exhaust gas when an air-fuel ratio of the exhaust gas is lean, and releasing the absorbed NOx when an oxygen concentration of the exhaust gas is reduced, comprising the steps of:
regenerating the filter by removing the particulates accumulated on the filter;
determining whether the NOx absorbent is in a condition of S poisoning due to absorption of SOx contained in the exhaust gas, in addition to the NOx; and
controlling a rate of increase of a temperature of the filter based on an amount of the particulates accumulated on the filter, when it is determined that the NOx absorbent is in the condition of S poisoning.

A method, wherein the rate of increase of the temperature of the filter is controlled such that the rate of increase is inversely proportional to the amount of the particulates accumulated on the filter.

A method for controlling an emission control system for an internal combustion engine, which includes a filter that collects particulates contained in an exhaust gas, and carries an NOx absorbent thereon, the NOx absorbent absorbing NOx contained in the exhaust gas when an air-fuel ratio of the exhaust gas is lean, and releasing the absorbed NOx when an oxygen concentration of the exhaust gas is reduced, comprising the steps of:
regenerating the filter by removing the particulates accumulated on the filter;
determining whether the NOx absorbent is in a condition of S poisoning due to absorption of SOx contained in the exhaust gas, in addition to the NOx;
supplying a reducing agent for reducing NOx, toward the filter that carries the NOx absorbent; and
controlling a supply amount of the reducing agent, such that when it is determined that an amount of SOx absorbed in the NOx absorbent is greater than a predetermined value, a first amount of the reducing agent is supplied until a temperature of the filter reaches a predetermined level, and such that a second amount of the reducing agent that is larger than the first amount is supplied after the temperature of the filter reaches the predetermined level.

A method for controlling an emission control system for an internal combustion engine, which includes a filter that collects particulates contained in an exhaust gas, and carries an NOx absorbent thereon, the NOx absorbent absorbing NOx contained in the exhaust gas when an air-fuel ratio of the exhaust gas is lean, and releasing the absorbed NOx when an oxygen concentration of the exhaust gas is reduced, comprising the steps of:
estimating an amount of the particulates accumulated on the filter;
recovering the NOx absorbent from S poisoning when the NOx absorbent is in a condition of S poisoning due to absorption of SOx contained in the exhaust gas, in addition to the NOx; and
terminating a process to recover the NOx absorbent from S poisoning, when the amount of the accumulated particulates is larger than a predetermined value.

A method for controlling an emission control system for an internal combustion engine, which includes a filter that collects particulates contained in an exhaust gas, and carries an NOx absorbent thereon, the NOx absorbent absorbing NOx contained in the exhaust gas when an air-fuel ratio of the exhaust gas is lean, and releasing the absorbed NOx when an oxygen concentration of the exhaust gas is reduced, comprising the steps of:
determining whether the NOx absorbent is in a condition of S poisoning due to absorption of SOx contained in the exhaust gas, in addition to the NOx;
estimating an amount of the particulates accumulated on the filter, when it is determined that the NOx absorbent is in the condition of S poisoning;
calculating an instantaneous target temperature based on the estimated amount of the accumulated particulates, such that a temperature of the filter can be raised to the instantaneous target temperature without causing thermal deterioration of the filter even if all of the accumulated particulates are burned out;
raising the temperature of the filter for a predetermined period of time if the instantaneous target temperature is lower than a final target temperature at which a process to recover the NOx absorbent from S poisoning can be carried out.

A method for controlling an emission control system, wherein the amount of the particulates accumulated on the filter is estimated based on at least an actual pressure difference across the filter, and a predicted pressure difference across the filter which is predicted based on an exhaust gas temperature measured downstream of the filter and an intake air quantity.

An emission control system, wherein the instantaneous target temperature is calculated, taking account of a thermal energy generated by burning of all of the particulates accumulated on the filter, and a temperature rise of the filter resulting from the thermal energy.

### BRIEF DESCRIPTION OF THE DRAWINGS

The above and other objects, features, advantages, and technical and industrial significance of this invention will be better understood by reading the following detailed description of exemplary embodiments of the invention, when considered in connection with the accompanying drawings, in which:
Fig. 1 is a view showing a general arrangement of an internal combustion engine that employs an emission control system according to the invention;
Fig. 2 is a cross sectional view taken along line 1-1 of Fig. 1;
Fig. 3 is a flowchart illustrating a control routine executed by the emission control system for the engine, which is constructed according to a first embodiment of the invention;
Fig. 4 is a flowchart illustrating a control routine executed by the emission control system for the engine, which is constructed according to a second embodiment of the invention;
Fig. 5 is a flowchart showing details of step S402 of the control routine of Fig. 4;
Fig. 6 is a flowchart showing details of step S403 of the control routine of Fig. 4; and
Fig. 7 is a flowchart showing details of step S404 of the control routine of Fig. 4.

### DETAILED DESCRIPTION OF PREFERRED EMBODIMENTS

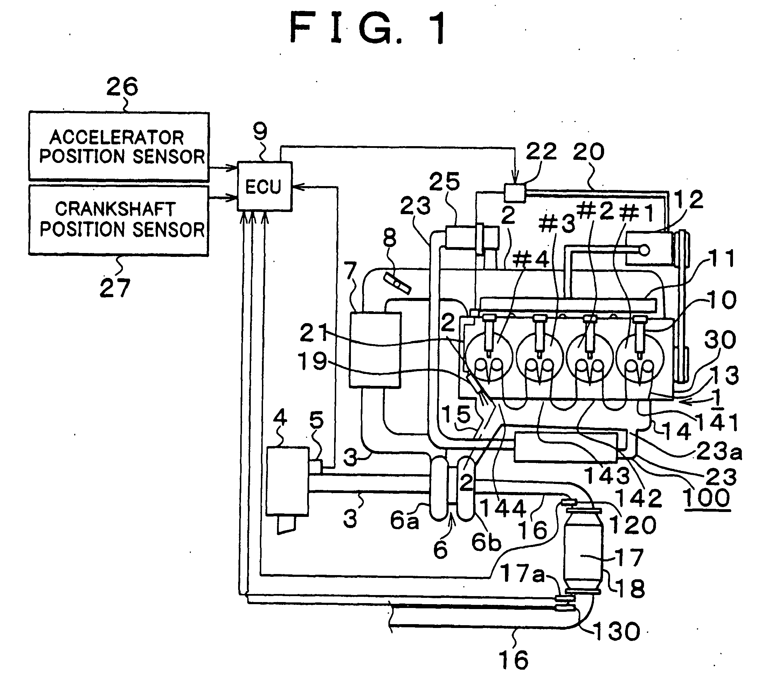

Referring first to Fig. 1, there is shown a general arrangement of an internal combustion engine 1 that employs an emission control system constructed according to the invention. The internal combustion engine 1 is an in-line four-cylinder diesel engine of compression ignition type. Each of the cylinders has a combustion chamber which is supplied with air through an intake pipe 3 and an intake manifold 2.

The intake pipe 3 is provided at its inlet end with an air cleaner 4, and at its intermediate portion with an airflow meter 5, a compressor 6a of a turbocharger 6, an intercooler 7, and a throttle valve 8 that is operable to adjust the quantity of air to be introduced into the intake manifold 2.

The airflow meter 5 generates an output signal indicative of the quantity of air introduced into the intake pipe 3 through the air cleaner 4. This output signal is fed to an electronic engine control unit (ECU) 9 that controls the engine 1. The ECU 9 has a digital computer including a read-only memory (ROM), a random access memory (RAM), a central processing unit (CPU), an input port and an output port, which are interconnected with each other through a bidirectional bus. The engine 1 is provided to control the engine 1.

When the output signal of the airflow meter 5 is fed to the ECU 9 through the input port, the CPU calculates an intake air quantity Ga on the basis of the received output signal of the airflow meter 5. The intake air quantity Ga is the quantity of the air introduced into the intake pipe 3 per unit time.

A fuel injector 10 is provided to inject a fuel (e.g., light oil) into the combustion chamber of each cylinder of the engine 1. The fuel stored in a fuel tank (not shown) is delivered by a fuel pump 12 to a common rail 11 through which the fuel injectors 10 for the respective combustion chambers are supplied with the fuel. The amount of the fuel that should be injected through each fuel injector 10 is calculated by the CPU of the ECU 9, on the basis of the operating state of the engine 1.

The fuel pump 12 is driven by a crankshaft (not shown) of the engine 1. The timing at which each fuel injector 10 is opened and the period for which the fuel injector 10 is held in the open state are controlled by the ECU 9 on the basis of the operating state of the engine 1.

Exhaust gases emitted from the combustion chambers of the cylinders of the engine 1 are discharged into an exhaust manifold 14 communicating with exhaust ports 13 of the respective combustion chambers through respective branch passages. In Fig. 1, the four cylinders of the engine 1 are numbered in the direction from the right end to the left end of the engine 1, as first, second, third and fourth cylinders #1, #2, #3 and #4, respectively.

The above-indicated branch passages corresponding to the exhaust ports 13 of the cylinders #1 #4 are identified by reference numerals 141, 142, 143 and 144, respectively.

A connecting pipe 15 communicating with the turbocharger 6 is connected to one of opposite end portions of the exhaust manifold 14, namely, to the left end portion (in Fig. 1) of the exhaust manifold 14 which corresponds to the fourth cylinder #4. A turbine 6b of the turbocharger 6 is connected to one end of an exhaust pipe 16. The exhaust gas is fed from the exhaust manifold 14 to the turbine 6b of the turbocharger 6 through the connecting pipe 15. The turbine 6b is rotated by the exhaust gas, so that the compressor 6a connected to the turbine 6b is rotated to pressurize the intake air which has been introduced into the intake pipe 3. The exhaust ports 13, exhaust manifold 14, connecting pipe and exhaust pipe 16 cooperate with each other to define an exhaust passage of the engine 1. This exhaust passage ends at the outlet end of the exhaust pipe 16.

The exhaust gas introduced into the exhaust pipe 16 through the turbine 6b is discharged into the atmosphere through a muffler. Acatalyst-carrying particulate filter 18 (hereinafter referred to simply as "particulate filter 18") is disposed in a portion of the exhaust pipe 16 between the turbine 6b and the muffler. The particulate filter 18 carries an occlusion-reduction type NOx catalyst 17 (or NOx absorbent). This NOx catalyst 17 will be described in detail.

The exhaust pipe 16 is provided with a pressure sensor 120 disposed at a position immediately upstream of the particulate filter 18, and a pressure sensor 130 disposed at a position immediately downstream of the particulate filter 18. The pressure sensor 120 is adapted to detect the pressure of the exhaust gas immediately before the exhaust gas enters the particulate filter 18, while the pressure sensor 130 is adapted to detect the pressure of the exhaust gas immediately after the exhaust gas has left the particulate filter 18. An actual value of a pressure difference Pd across the particulate filter 18 can be calculated on the basis of the output signals of the pressure sensors 120, 130. The actual value of the pressure difference Pd will be hereinafter referred to as "actual pressure difference Pd across the particulate filter 18".

The NOx catalyst 17 of occlusion-reduction type may be replaced by an NOx catalyst of selective-reduction type.

A fuel injecting nozzle 19 is attached to a cylinder head 30 of the engine 1 such that the fuel injecting nozzle 19 is open to the exhaust port 13 of the fourth cylinder #4, which is located at the leftmost end of the exhaust manifold 14, as seen in Fig. 1. The fuel injecting nozzle 19 is connected to the fuel pump 12 via a fuel pipe 20, and a fuel passage 21 formed through the cylinder head 30, so that the pressurized fuel is delivered from the fuel pump 12 to the fuel injecting nozzle 19. The fuel pipe 20 is provided with a control valve 22, which controls an amount of the fuel to be injected from the fuel injecting nozzle 19 into the exhaust port 13 of the cylinder #4. The ECU 9 controls the opening and closing actions and the degree of opening of the control valve 22.

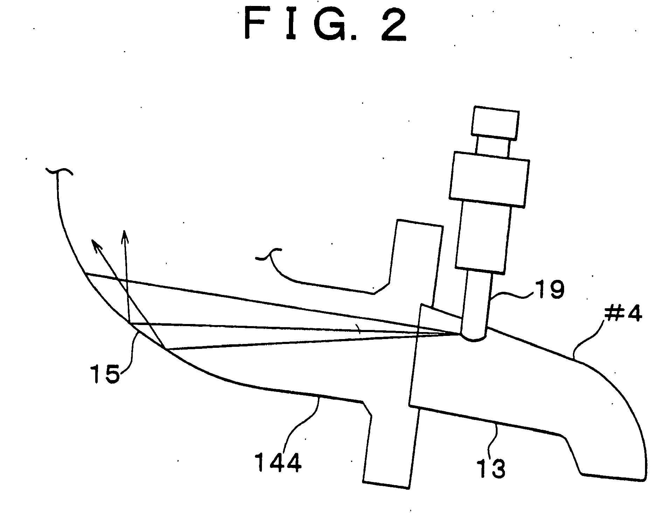

Referring next to the cross sectional view of Fig. 2 taken along line 2-2 of Fig. 1, the fuel injecting nozzle 19 is positioned in the cylinder head 30 such that the fuel injected from the outlet of the nozzle 19 is directed toward the connecting pipe 15.

The emission control system according to this embodiment of the invention includes reductant supplying means for supplying the particulate filter 18 with a reducing agent. The reductant supplying means is constituted by the fuel pump 12, the fuel pipe 20, the control valve 22, the fuel passage 21 and the fuel injecting nozzle 19. As described above, the control valve 22 is arranged to control the amount of the fuel to be injected from the nozzle 19. In the instant embodiment, the fuel for the internal combustion engine 1 is used as the reducing agent. Thus, the reductant supplying means functions as fuel supplying means for supplying the particulate filter 18 with the fuel. Since the present internal combustion engine 1 is a diesel engine operable with light oil, the light oil serves as the reducing agent in this embodiment.

To control the amount of fuel to be injected from the fuel injecting nozzle 19, the control valve 22 is controlled by the CPU of the ECU 9 according to a known application program. Thus, the ECU 9 serves as supply-amount control means for controlling the amount of supply of the reducing agent to the particulate filter 18.

It will be understood that the fuel injecting nozzle 19 from which the fuel is delivered as the reducing agent serves as an outlet of the reductant supplying means. The fuel injecting nozzle 19 serving as the outlet of the reductant supplying means is disposed in a portion of the exhaust passage which is upstream of the occlusion-reduction type NOx catalyst 17, so that the fuel delivered from the nozzle 19 is supplied to the NOx catalyst 17 of the particulate filter 18. As described below, fuel-addition determining means is provided to determine whether the reductant supplying means is required to add or supply the fuel to the NOx catalyst 17.

The fuel-addition determining means may be arranged to estimate the amount of NOx which has been absorbed in the NOx absorbent of the NOx catalyst 17. This estimation is effected on the basis of the past operating state of the internal combustion engine 1. In this case, the fuel-addition determining means determines that the reductant supplying means should be activated to add the fuel, when the estimated amount of NOx has increased to a predetermined threshold value. This function of the fuel-addition determining means is performed by the CPU of the ECU 9 according to a suitable application program. Thus, the ECU 9 is considered to serve as the fuel-addition determining means.

The suitable amount of fuel to be supplied by the reductant supplying means varies depending upon the estimated amount of NOx. In other words, the amount of fuel to be injected from the fuel injecting nozzle 19 is determined based on the estimated amount of NOx, and the thus determined amount of fuel is injected by operating the reductant supplying means for a suitable length of time corresponding to the estimated amount of NOx, so as to reduce the oxygen concentration of the exhaust gas that enters the to the occlusion-reduction type NOx catalyst 16. As a result, the NOx which has been absorbed in the NOx catalyst 17 is released and reduced into N₂.

An exhaust gas recirculating pipe (hereinafter abbreviated to "EGR pipe") 23 is connected at its inlet end 23a to the other end portion of the exhaust manifold 14, that is, to the right end portion of the exhaust manifold 14 as seen Fig. 1, which corresponds to the first cylinder #1 of the engine 1. The EGR pipe 23 is provided to return a portion of the exhaust gas to the intake system. The EGR pipe 23 is connected at its outlet end to the intake manifold 2 of the intake system. With the inlet end 23a of the EGR pipe 23 held in communication with the right end portion of the exhaust manifold 14, the exhaust emissions from the four cylinders #1-#4 tend to flow toward and merge at the right end portion of the exhaust manifold 14.

The EGR pipe 23 is provided with an EGR cooler 24 and an EGR valve 25.

The EGR cooler 24 functions as a heat exchanger for exchanging heat between the cooling water for the engine 1 and the exhaust gas flowing through the EGR pipe 23 (which will be referred to as "EGR gas"). The EGR cooler 24 includes a water conduit (not shown) through which the cooling water flows, and an EGR gas conduit through which the EGR gas flows in direct contact with the water conduit. The temperature of the EGR gas flowing from the EGR cooler 24 toward the ERG valve 25 through the ERG pipe 23 is lowered by a transfer of heat from the EGR gas to the cooling water flowing through the water conduit while the EGR gas is flowing through the EGR gas conduit, in contact with the water conduit.

The degree of opening of the EGR valve 25 is controlled by the ECU 9; depending upon the operating state of the engine 1, so as to control the EGR rate. It will be understood that the EGR pipe 23, the EGR cooler 24 and the EGR valve 25 cooperate with each other to constitute an exhaust gas recirculating system (EGR system) 100.

An exhaust temperature sensor 17a is attached to a portion of the exhaust pipe 16 which is immediately downstream of the particulate filter 18. This temperature sensor 17a generates an output signal indicative of a temperature Tc of the exhaust gas which has left the particulate filter 18 (hereinafter referred to as "filter-downstream exhaust gas temperature"). The output signal of the exhaust temperature sensor 17a is fed to the ECU 9 via the input port. This output signal is used to obtain various temperature information such as the temperature of the occlusion-reduction type NOx catalyst 17 carried on the particulate filter 18, and the temperature of the particulate filter 18. The temperature of the NOx catalyst 17 may be used as an index indicating whether the NOx catalyst 17 is normally or effectively operable, that is, an index indicating whether an activation temperature at which the NOx catalyst 17 is activated has been reached. The exhaust temperature sensor 17a may be replaced by a temperature sensor disposed on the particulate filter 18 to obtain temperature information on the occlusion-reduction type NOx catalyst 17.

The ECU 9 receives through its input port the output signal of an accelerator position sensor 26 and the output signal of a crankshaft position sensor 27. The output signal of the accelerator position sensor 26 is a voltage signal whose value is proportional to the angle of opening of the throttle valve 8. On the basis of this voltage signal, the ECU 9 calculates the engine load Te. The crankshaft position sensor 27 is arranged to generate a pulse each time the crankshaft of the engine 1 is rotated by a predetermined angle. Based on this pulse signal, the ECU 9 calculates the engine speed Ne.

The ECU 9 determines the operating state of the engine 1 on the basis of the engine load Te and speed Ne, and controls the fuel injectors 10 according to the determined operating state of the engine 1. Described more specifically, the ECU 9 determines the point of time at which each fuel injector 10 is opened, and the period of time for which the fuel injector 10 is held open.

The occlusion-reduction type NOx catalyst 17 housed in the particulate filter 18 includes (a) a support formed of alumina (Al₂O₃), for instance, (b) at least one element carried on the support and selected from alkali metals, such as potassium (K), sodium (Na), lithium (Li) and cesium (Cs), alkali earth metals, such as barium (Ba) and calcium (Ca), and rare earth metals, such as lanthanum (La) and yttrium (Y), and (c) at least one noble metal, such as platinum (Pt) also carried on the support.

The NOx catalyst 17 absorbs NOx when the exhaust air-fuel ratio (i.e., A/F ratio of the exhaust gas) is lean, and release the NOx absorbed therein as NO₂ or NO when the exhaust air-fuel ratio is made stoichiometric or rich so that the oxygen concentration of the exhaust gas is lowered. In the latter case, the NOx released from the NOx catalyst 17 is immediately reduced into N₂ by reaction with unburned hydrocarbon (HC) and carbon monoxide (CO).

With the above arrangement, the exhaust gas can be purified of harmful components, such as HC, CO and NOx, contained therein, by suitably controlling the exhaust air/fuel ratio.

The exhaust air/fuel ratio is defined as a ratio of the total amount of air supplied into the engine 1 to the total amount of fuel (carbon monoxide) supplied into the engine 1. The total amount of air includes an amount of air supplied to a portion of the exhaust pipe 16 upstream of the particulate filter 18, an amount of air supplied to the combustion chambers, and an amount of air supplied into the intake passage. Similarly, the total amount of fuel includes an amount of fuel supplied to the above-indicated upstream portion of the exhaust pipe 16, an amount of fuel supplied to the combustion chambers, and an amount of fuel supplied into the intake passage. When the fuel or reducing agent and the air are not supplied to the portion of the exhaust pipe 16 upstream of the particulate filter 18, the air/fuel ratio of the exhaust gas is the same as the air/fuel ratio of the air-fuel mixture supplied to the combustion chambers of the engine 1.

In diesel engines, an air-fuel mixture used is considerably fuel-lean, that is, the air/fuel ratio (A/F ratio) of the air-fuel mixture is considerably higher than the stoichiometric value (14 to 15). Accordingly, the exhaust gas which is emitted from the diesel engine 1 and to which the NOx catalyst 17 is exposed is considerably fuel-lean while the diesel engine 1 operates in a normal state. In this normal operating state, the NOx contained in the exhaust gas is absorbed in the NOx catalyst 17, and the amount of NOx released from the NOx catalyst 17 is extremely small.

In gasoline engines, the NOx absorbed in the NOx catalyst can be released by controlling the air/fuel ratio of the air-fuel mixture to be supplied to the combustion chambers, to the stoichiometric value or to a value lower (i.e., richer) than the stoichiometric value, so as to make the exhaust air/fuel ratio stoichiometric or rich, thereby reducing the oxygen concentration of the exhaust gas. In the diesel engines, however, the air/fuel ratio of the air-fuel mixture to be supplied to the combustion chambers cannot be made stoichiometric or rich as in the gasoline engines, because the diesel engines tend to suffer from problems such as production of soot if the air-fuel mixture is controlled to be stoichiometric or fuel-rich.

In the diesel engines, therefore, it is required to supply or add a reducing agent to the exhaust gas for reducing the oxygen concentration of the exhaust gas to release and reduce the NOx absorbed in the NOx catalyst 17, at a suitable point of time before the NOx absorbing ability of the NOx catalyst 17 is saturated.

In view of the above, the emission control system is arranged such that the ECU 9 estimates the amount of NOx absorbed in the NOx catalyst 17, on the basis of the past operating state of the engine 1. When the estimated amount of NOx has increased to a predetermined threshold value, the ECU 9 commands the control valve 22 to be opened for a suitable length of time for injecting a suitable amount of fuel into the exhaust gas through the fuel injecting nozzle 19, to thereby reduce the oxygen concentration of the exhaust gas that enters the NOx catalyst 17, so that the NOx absorbed in the NOx catalyst 17 is released and reduced into N₂. Thus, the ECU 9 determines, on the basis of the operating state of the engine 1, whether the reductant supplying means as described above should be operated to supply the NOx catalyst 17 with the reducing agent in the form of the fuel.

The determination as to whether the reductant supplying means should be operated is made according to the application program stored in the ROM of the ECU 9. This application program uses a data map stored in the ROM. This data map defines the EGR rate as a function of the engine speed Ne and the engine load Te.

Described in detail, the EGR rate, which is a proportion of the volume of the exhaust gas to be introduced into the intake system through the ERG pipe 24, is obtained on the basis of the calculated engine speed Ne and load Te, and according to the stored data map. When the thus obtained EGR rate is held within a predetermined range, the CPU of the ECU 9 determines that the reducing agent in the form of light oil should be injected from the fuel injecting nozzle 19 into the exhaust gas. When the EGR rate obtained does not fall within the predetermined range, the CPU determines that the reducing agent should not be injected from the nozzle 19. In this case, the injection of the reducing agent from the nozzle 19 is stopped or inhibited. Thus, the determination as to whether the reducing agent should be injected or not is made by the CPU of the ECU 9 according to the application program and data map stored in the ROM. As described above, the ECU 9 serves as the fuel-addition determining means for making the above-mentioned determination.

When the ECU 9 serving as the fuel-addition determining means determines that the fuel should be added or injected from the fuel injecting nozzle 19, the delivery pressure of the fuel pump 12 is raised so as to increase the pressure of the fuel to be delivered from the nozzle 19, so that the pressurized fuel delivered from the nozzle 19 is directed toward the connecting pipe 15. It will be understood that the fuel pump 12 and the ECU 9 operable to control the fuel pump 12 cooperate to function as delivery-pressure increasing means for increasing the delivery pressure of the fuel injecting nozzle 19 when the ECU 9 serving as the fuel-addition determining means determines that the addition of the fuel as the reducing agent to the exhaust gas.

The engine 1 equipped with the particulate filter 18 would suffer from the problem as described above with respect to the known emission control system, if no solution to the problem were provided.

### First Embodiment

The emission control system according to the first embodiment of this invention employs a solution as described below, to prevent the problem of thermal deterioration of the catalyst-carrying particulate filter 18 due to burning of the particulate matters. Briefly described, the emission control system according to the first embodiment is adapted to remove the particulate matters before the NOx catalyst 17 is subjected to the treatment to recover the catalyst 17 from S poisoning. This preliminary removal of the particulate matters is effective to reduce the amount of heat generated due to burning of the particulate matters when the recovery process from the S poisoning is effected.

Described in detail, the emission control system according to the first embodiment includes: (a) filter regenerating means for regenerating the particulate filter 18 by removing the particulate matters accumulated on the particulate filter 18, (b) S-poisoning determining means for comparing the amount of SOx absorbed in the occlusion-reduction type NOx catalyst 17 with a predetermined threshold, to determine whether the NOx catalyst 17 is suffering from S poisoning due to SOx absorbed in addition to NOx in the NOx catalyst 17 in an amount that causes a significant reduction of the NOx removal efficiency of the NOx catalyst 17; and (c) S-poisoning recovery means for recovering the NOx catalyst 17 from the S poisoning. When the S-poisoning determining means determines that the NOx catalyst 17 is suffering from the S poisoning, the filter regenerating means is first activated to remove the particulate matters absorbed in the NOx catalyst 17, and the S-poisoning recovery means is then activated to effect the treatment or process to recover the NOx catalyst 17 from the S poisoning.

The filter regenerating means may use any suitable means for removing the particulate matters to recover the particulate filter 18. Preferably, the filter regenerating means includes means for burning out the particulate matters collected by the particulate filter 18, by utilizing heat of the exhaust gas emitted from the engine 1 or heat generated by an electric heater provided in the engine 1. The point of time at which the particulate matters are burned out by the heat of the exhaust gas or electric heater is determined depending upon the operating state of the engine 1.

The S-poisoning determining means may be arranged to compare the amount of SOx absorbed in the occlusion-reduction type NOx catalyst 17 with a predetermined threshold value above which the NOx catalyst 17 is considered to be suffering from the S poisoning. The function of the S-poisoning determining means is performed by the CPU of the ECU 9 according to a suitable application program. Thus, the ECU 9 is considered to serve as the S-poisoning determining means.

The S-poisoning recovery means may be arranged to control the exhaust gas that enters the occlusion-reduction type NOx catalyst 17, such that the exhaust gas having a stoichiometric or rich air-fuel ratio is caused to flow into the NOx catalyst 17 while keeping the temperature of the NOx catalyst 17 at an elevated temperature of about 600-700°C. The function of the S-poisoning recovery means is performed by the CPU of the ECU 9 according to a suitable application program. Thus, the ECU 9 is considered to serve as the S-poisoning recovery means.

The above-indicated threshold value of the amount of SOx which is used by the S-poisoning determining means is an upper limit of the SOx amount absorbed in the NOx catalyst 17, above which the NOx catalyst 17 is considered to be substantially poisoned by the SOx.

In the emission control system according to the first embodiment, the filter regenerating means is activated to remove the particulate matters when the S-poisoning determining means constituted by the ECU 9 determines that the occlusion-reduction type catalyst 17 has been poisoned by the excessively large amount of SOx. After the removal of the particulate matters, the S-poisoning removing means is activated to remove the S poisoning of the NOx catalyst 17.

In the above arrangement in which the particulate matters have been removed by the time when the NOx catalyst 17 is subjected to the process to recover the catalyst 17 from the S poisoning, a temperature rise of the particulate filter 18 due to heat generated by burning of the particulate matters does not occur during the S-poisoning recovery process. Accordingly, the instant arrangement effectively prevent the undesirable thermal deterioration of the particulate filter 18 during the process to recover the NOx catalyst 17 from the S poisoning.

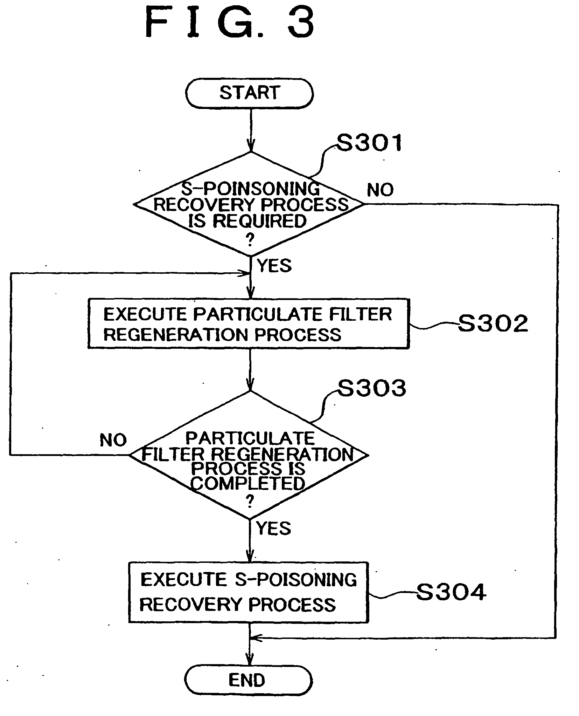

Referring to the flowchart of Fig. 3, there will be described a control routine executed by the emission control system of the engine 1, according to the first embodiment of the invention.

The control routine, which consists of steps S301 through S304, is executed according to a control program stored in the ROM of the ECU 9. The control program is retrieved as needed by the CPU of the ECU 9.

The control routine of Fig. 3 is initiated with step S301 to determine whether the occlusion-reduction type NOx catalyst 17 has been poisoned by SOx absorbed therein, and whether the process to recover the NOx catalyst 17 from the S poisoning is required.

To permit the determination in step S301 as to whether the NOx catalyst 17 has been poisoned by the SOx, the ROM of the ECU 9 stores a data map (not shown) which represents the amounts of SOx and NOx absorbed in the NOx catalyst 17 per unit time, as a function of the load Te and speed Ne of the engine 1. If the total amount of SOx and NOx obtained according to the data map and on the basis of the engine load and speed Te, Ne is larger than a predetermined threshold value, the CPU determines that the NOx catalyst 17 has been substantially poisoned by the SOx. If an affirmative decision (YES) is obtained in step S301, the control process proceeds to step S302. If a negative decision (NO) is obtained in step S301, one cycle of execution of the control routine is terminated.

In step S302, the particulate matters accumulated on the particulate filter 18 are removed to regenerate the particulate filter 18.

Step S302 is followed by step S303 to determine whether the regeneration of the particulate filter 18 is completed that is, whether the particulate matters accumulated on the particulate filter 18 have been removed by burning. If an affirmative decision (YES) is obtained in step S303, the control process proceeds to step S304. If a negative decision (NO) is obtained in step S303, the control process returns to step S302 to continue the regeneration of the particulate filter 18. In step S304, the NOx catalyst 17 is recovered from the S poisoning.

### Modification 1 of First Embodiment

The emission control system according to the first embodiment may further include temperature rise control means for controlling the temperature rise of the particulate filter 18 on the basis of the state of removal of the particulate matters by the filter regenerating means.

The function of the temperature rise control means may be performed by the CPU of the ECU 9 according to a suitable application program formulated to control the temperature rise of the particulate filter 18. Thus, the ECU 9 is considered to serve as the temperature rise control means.

In this modification, too, the particulate matters are removed by the filter regenerating means to regenerate the particulate filter 18 when the S-poisoning determining means determines that the NOx absorbent of the NOx catalyst 17 has been substantially poisoned by the SOx. In addition, the temperature rise of the particulate filter 18 is controlled by the temperature rise control means, on the basis of the state in which the particulate matters are removed by the filter regenerating means. This arrangement prevents random burning of the particulate matters, that is, permits controlled burning of the particulate matters, so as to restrict an abrupt temperature rise of the particulate filter 18 due to instantaneous burning of the particulate matters. Thus, the present arrangement is effective to avoid thermal deterioration of the particulate filter 18.

### Modification 2 of First Embodiment

The emission control system according to the first embodiment may further include temperature-increase-rate control means for controlling the rate of increase of the temperature of the particulate filter 18, on the basis of the amount of the particulate matters accumulated on the particulate filter 18.

The function of the temperature-increase-rate control means may be performed by the CPU of the ECU 9 according to a suitable application program formulated to change the rate of increase of the temperature of the particulate filter 18 on the basis of the amount of the particulate matters accumulated on the particulate filter 18, when the S-poisoning determining means determines that the NOx absorbent of the NOx catalyst 17 of the filter 18 has been substantially poisoned by the SOx. Thus, the ECU 9 is considered to serve as the temperature increase-rate control means.

According to the present modification, the temperature of the particulate filter 18 is raised at a controlled rate that depends upon the amount of the particulate matters accumulated on the particulate filter 18, so that the particulate matters are gradually burned out. That is, the present arrangement prevents an instantaneous temperature rise of the particulate filter 18 that causes thermal deterioration of the particulate filter 18. Thus, the instant arrangement is effective to avoid the thermal deterioration of the particulate filter 18.

The temperature-increase-rate control means is preferably arranged such that the rate of increase of the temperature of the particulate filter 18 is inversely proportional to the amount of the particulate matters. In other words, the rate of increase of the temperature is controlled such that the temperature increase rate is lower when the amount of the accumulate particulate matters is relatively large, than when the amount is relatively small.

When a relatively large amount of particulate matters is accumulated on the particulate filter 18, the particulate matters tend to be burned out instantaneously:
In the present modification, however, the rate of increase of the temperature of the particulate filter 18 is restricted when the amount of the accumulated particulate matters is relatively large, so that a batch of the particulate matters is prevented from being burned in a moment. The present arrangement is effective to prevent an instantaneous temperature rise that would cause thermal deterioration of the particulate filter 18.

### Modification 3 of First Embodiment

The emission control system according to the first embodiment may utilize the reductant supplying means and reductant supply-amount control means as indicated above. In this modification, the reductant supplying means is activated when the S-poisoning determining means determines that the amount of SOx absorbed in the NOx catalyst 17 is larger than a predetermined threshold value. The reductant supplying means is arranged to initially supply or add a specified amount of reducing agent until the temperature of the particulate filter 18 is heated to a predetermined level, and then supply or add a certain amount of reducing agent that is greater than the above-indicated specified amount after the temperature has reached the predetermined level.

If a relatively large amount of reducing agent is supplied at a time to the particulate filter 18 by the reductant supplying means, the particulate matters may be instantaneously burned out upon burning of the reducing agent, resulting in an abrupt rise of the temperature of the particulate filter 18 and consequent thermal deterioration of the particulate filter 18. In the present modification in which a relatively small amount of reducing agent is initially introduced, the amount of heat generated by burning of the reducing agent is relatively small, and the particulate matters are gradually burned out without instantaneous burning, making it possible to prevent thermal deterioration of the particulate filter 18. The amount of the reducing agent initially supplied is determined so that the particulate matters have been burned out at a moment when the particulate filter 18 has been heated to the predetermined temperature. After the particulate matters accumulated on the particulate filter 18 are burned out, the comparatively large amount of reducing agent is supplied for the purpose of removing or reducing the NOx absorbed in the NOx catalyst 17. This arrangement prevents thermal deterioration of the particulate filter 18 due to an instantaneous burning of the particulate matters upon addition of the relatively large amount of reducing agent. Furthermore, the addition of the relatively large amount of reducing agent permits a temperature rise of the catalyst-carrying particulate filter 18 to a level high enough to recover the NOx catalyst 17 from the S poisoning. This temperature level is higher than the level at which the particulate matters accumulated on the particulate filter 18 are removed. Thus, the present arrangement assures higher efficiency of the S-poisoning recovery process.

### Second Embodiment

While the emission control system constructed according to the first embodiment is arranged to prevent thermal deterioration of the particular filter 18 by removing the particulate matters upon determination that the process to recover the NOx catalyst 17 from S poisoning is required and before this recovery process is effected, the thermal deterioration of the particulate filter 18 can be prevented by determining the amount of fuel added by the fuel injecting nozzle 19 for removing the S poisoning, while taking into account the thermal energy generated by burning of the particulate matters, as in an emission control system constructed according to the second embodiment of the invention.

The emission control system according to the second embodiment of the invention will now be described.

The CPU of the ECU 9 obtains a quantity of fuel Qad that is required to be injected from the fuel injecting nozzle 19 to raise the temperature of the particulate filter 18 to a final target temperature Tf at which the process to recover the NOx catalyst 17 from the S poisoning can be accomplished. The required quantity of fuel Qad is obtained on the basis of the operating state of the engine 1, more specifically, the operating speed Ne and load Te of the engine 1. The CPU also receives the filter-downstream exhaust gas temperature Tc generated by the temperature sensor 17a. The CPU further obtains an estimated amount of temperature rise Tu1 of the NOx catalyst 17 resulting from the addition of the required quantity of fuel Qad. The CPU also obtains a pressure difference Pd' across the particulate filter 18, on the basis of the filter-downstream exhaust gas temperature Tc and the intake air quantity Ga indicated above. This pressure difference Pd' will be hereinafter referred to as "predicted pressure difference Pd'". The CPU further estimates an amount Gp of particulate matters accumulated on the particulate filter 18, according to a predetermined particulate-amount estimating data map (not shown) which defines a relationship between the amount Gp, and basic parameters which are the predicted pressure difference Pd' across the particulate filter 18, the filter-downstream exhaust gas temperature Tc, the intake air quantity Ga and the actual pressure difference Pd across the particulate filter 18. The CPU further calculates a total amount Ep of heat or energy generated by burning of all of the accumulated particulate matters, by multiplying the estimated amount Gp of particulate matters by an amount of heat generated per unit mass of the particulate matters. An amount of temperature rise Td of the particulate filter 18 by the calculated total amount Ep of heat generated can be calculated by dividing the total amount Ep of heat by the heat capacity of the particulate filter 18. Suppose "Tm" represents an upper limit of the temperature above which the particulate filter 18 suffers from thermal or heat deterioration, a highest permissible temperature Ti to which the temperature of the particulate filter 18 can be raised without thermal deterioration can be obtained by subtracting the calculated amount of temperature rise Td from the upper limit temperature Tm. This highest permissible temperature Ti will be called "instantaneous target temperature". Thus, the instantaneous target temperature Ti is obtained by taking account of the thermal energy generated by burning of all the particulate matters which have been gradually accumulated on the particulate filter 18 during its service. To this end, the thermal energy indicated above is converted into an amount of temperature rise of the particulate filter 18, more specifically, into an amount of temperature rise of the occlusion-reduction type NOx catalyst 17 carried on the particulate filter 18.

A desired amount Tu2 of temperature rise required to raise the temperature of the particulate filter 18 to the instantaneous target temperature Ti by the fuel addition from the nozzle 19 is obtained by subtracting a difference (Tf - Ti) between the final target temperature Tf and the instantaneous target temperature Ti, from the estimated amount Tu1 of temperature rise by the addition of the required quantity Qad of the fuel. An instantaneous temperature-rise parameter Qad' is then obtained on the basis of the required fuel quantity Qad and a ratio of the desired amount Tu2 to the estimated amount Tu1, that is, by multiplying the required quantity Qad by the above-indicated ratio Tu2/Tu1. The instantaneous temperature-rise parameter Qad' represents a quantity of fuel that is required to be added so as to raise the temperature of the particulate filter 18 to the instantaneous target temperature Ti.

The ECU 9 is arranged to determine that the particulate filter 18 suffers from thermal deterioration or other defect, if a difference between the predicted pressure difference Pd' across the particulate filter 18 and the actual pressure difference Pd has exceeded a predetermined threshold. That is, the particulate filter 18 is considered to be thermally deteriorated or otherwise defective when the actual pressure difference Pd deviates from the predicted value Pd' by more than the predetermined threshold upper limit.

The second embodiment is different from the first embodiment in that the amount of fuel to be injected from the fuel injecting nozzle 19 is determined on the basis of the estimated amount of the particulate matters which are accumulated on the particulate filter 18 and which are removed to recover the particulate filter 18. The amount of the fuel to be added is determined according to the particulate-amount estimating data map stored in the ROM of the ECU 9, as described before.

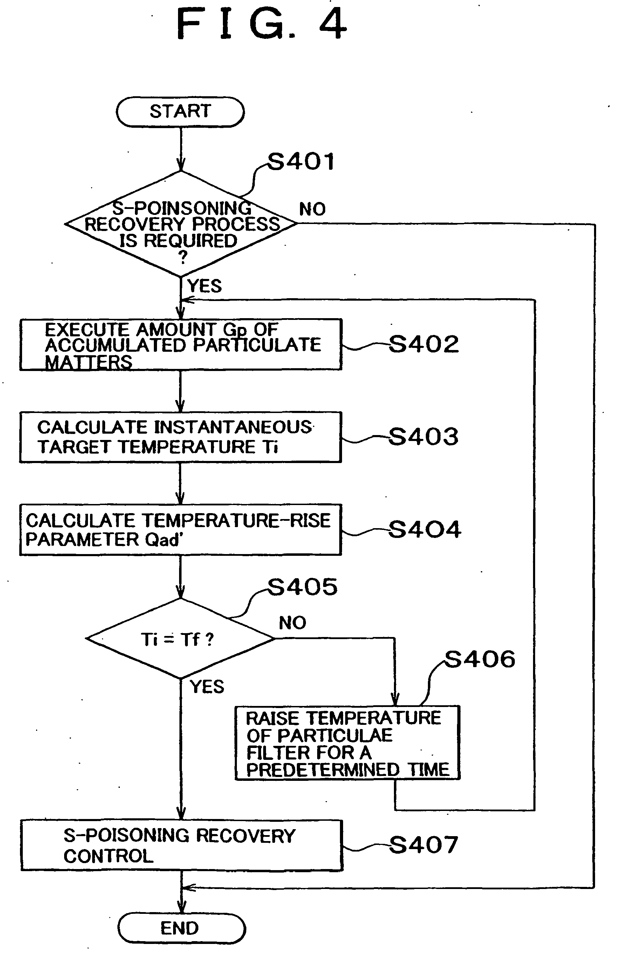

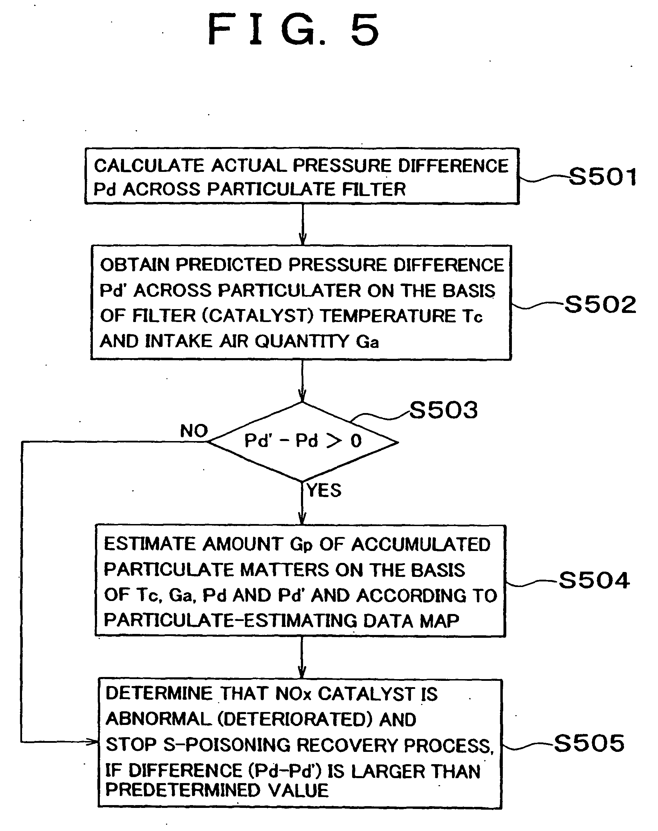

Referring to the flowchart of Fig. 4 and the flowcharts of Figs. 5-7 showing details of steps S402-404 of Fig. 4, there will be described a control routine executed by the emission control system for the engine 1, according to the second embodiment of the invention.

The control routine, which consists of steps S401 through S407, is executed according to a control program stored in the ROM of the ECU 9. The control program is retrieved as needed by the CPU of the ECU 9.

The control routine of Fig. 4 is initiated with step S401 to determine whether the occlusion-reduction type NOx catalyst 17 suffers from S poisoning, and whether the process to recover the catalyst 17 from the S poisoning is required.

The determination as to whether the NOx catalyst 17 has been substantially poisoned by the SOx is effected by first calculating the amounts of SOx and NOx absorbed in the NOx catalyst 17 per unit time, according to the data map (not shown) stored in the ROM of the ECU 9 and on the basis of the load Te and speed Ne of the engine 1. The calculated total amount of SOx and NOx is compared with the predetermined threshold value, to determine whether the NOx catalyst 17 has been substantially poisoned by SOx. If an affirmative decision (YES) is obtained in step S401, the control process proceeds to step S402. If a negative decision (NO) is obtained in step S401, one cycle of execution of the control routine of Fig. 4 is terminated.

In step S402, the amount Gp of particulate matters accumulated on the particulate filer 18 is estimated according to a routine illustrated in the flowchart of Fig. 5.

The routine of Fig. 5, which consists of steps S501-S505, is executed by the CPU of the ECU 9 according to a control program stored in the ROM of the ECU 9. The routine of Fig. 5 is retrieved by the CPU as needed.

The routine of Fig. 5 is initiated with step S501 to measure the pressures on the opposite sides of the particulate filter 18, on the basis of the output signals of the pressure sensors 120, 130 which are disposed immediately upstream and downstream of the particulate filter 18, respectively. Then, the actual pressure difference Pd across the particulate filter 18 is calculated on the basis of the measured pressures.

Then, the control process proceeds to step S502 to obtain the predicted pressure difference Pd' across the particulate filter 18 on the basis of the filter-downstream exhaust gas temperature Tc measured by the exhaust-gas temperature sensor 17a and the intake air quantity Ga measured by the airflow meter 6.

Step S503 is then executed to determine whether a difference (Pd' - Pd) between the predicted and actual pressure differences Pd' and Pd is larger than zero (0), that is, whether the predicted pressure difference Pd' is larger than the actual pressure difference Pd. If an affirmative decision (YES) is obtained in step S503, the control process proceeds to step S504. If a negative decision (NO) is obtained in step S503, the control process proceeds to step S505.

Step S504 is then executed to estimate the amount Gp of the particulate matters accumulated on the particulate filter 18, according to the above-indicated particulate-amount estimating data map stored in the ROM of the ECU 9 and on the basis of the measured filter-downstream exhaust gas temperature Tc, the measured intake air quantity Ga and the predicted and actual pressure differences Pd' and Pd. It will be understood that a portion of the ECU 9 assigned to execute step S504 constitutes particulate-amount detecting means for detecting the amount of the particulate matters accumulated on the particulate filter 18. The ECU 9 including the ROM storing the routine of Fig. 5 including step S504 is considered to constitute the particulate-amount detecting means.

Step S505 is executed to determine whether the difference (Pd' - Pd) obtained in step S503 is smaller than zero, namely, assumes a negative value, and whether the absolute value of this difference is larger than a predetermined threshold value. That is, step S505 is provided to determine whether a difference (Pd - Pd') is greater than a predetermined threshold value. If this determination is affirmative it is determined that the particulate filter 18 is deteriorated or defective. In this case, the process to recover the NOx catalyst 17 from the S poisoning is terminated. It will be understood that a portion of the ECU 9 assigned to execute step S505 constitutes recovery process terminating means for terminating the process to recover the NOx catalyst 16 from the S poisoning. The ECU 9 including the ROM storing the routine of Fig. 5 including step S505 is considered to constitute the recovery process terminating means.

The predetermined threshold value used in step S505 is a value of the difference (Pd - Pd') above which the particulate filter 18 is considered deteriorated or defective.

Referring back to the control routine of Fig. 4, step S402 for obtaining the estimated amount Gp of the particulate matters is followed by step S403 to calculate the instantaneous target temperature Ti.

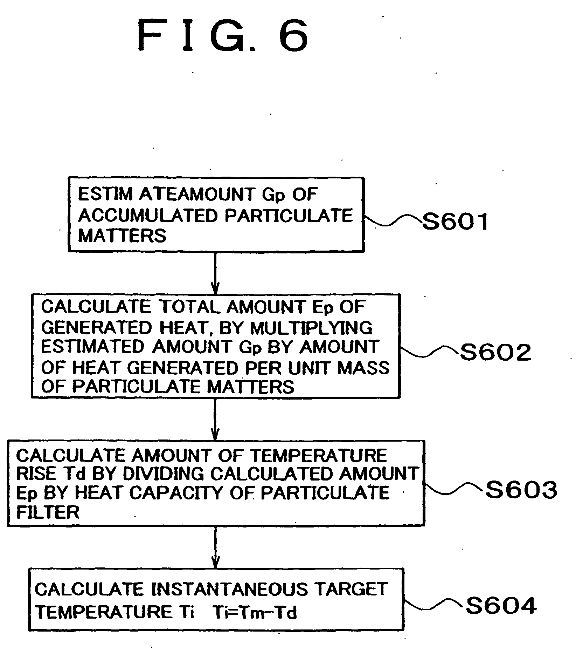

In step S403, the instantaneous target temperature Ti is calculated according to a routine illustrated in the flowchart of Fig. 6.

The routine of Fig. 6, which consists of steps S601-S604, is executed by the CPU of the ECU 9 according to a control program stored in the ROM of the ECU 9. The routine of Fig. 6 is retrieved by the CPU as needed.

The routine of Fig. 6 is initiated with step S601 to estimate the amount Gp of the particulate matters accumulated on the particulate filter 18, in the same manner as described above with respect to step S504 of Fig. 5.

Then, the control process proceeds to step S602 to calculate a total amount Ep of heat (thermal energy) to be generated by burning of an entire batch of the particulate matters. This total amount Ep is calculated by multiplying the estimated amount Gp of the particulate matters obtained in step S602, by an amount of heat generated per unit mass of the particulate matters. The amount of heat generated per unit mass of the particulate matters is obtained by experimentation and stored in the ROM.

Then, step S603 is executed to calculate the amount Td of temperature rise of the NOx catalyst 17 by dividing the total amount Ep of generated heat obtained in step S602, by the heat capacity of the particulate filter 18. The heat capacity is obtained by experimentation and stored in the ROM.

Step S603 is followed by step S604 to calculate the instantaneous target temperature Ti by subtracting the estimated amount Td of temperature rise from the upper limit temperature Tm above which the particulate filter 18 is thermally deteriorated.

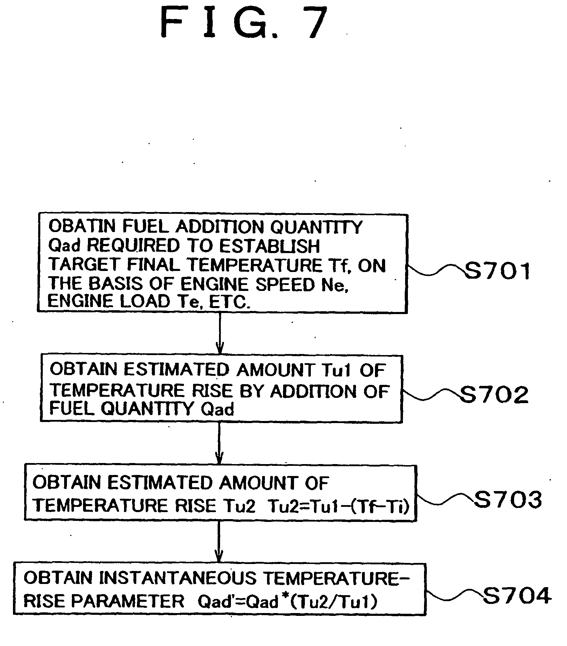

Referring back to the control routine of Fig. 4, step S403 is followed by step S404 to calculate the instantaneous temperature-rise parameter Qad' as indicated above, according to a routine illustrated in the flowchart of Fig. 7.

The routine of Fig. 7, which consists of steps S701-S704, is executed by the CPU of the ECU 9 according to a control program stored in the ROM of the ECU 9. The routine of Fig. 7 is retrieved by the CPU as needed.

The routine of Fig. 7 is initiated with step S701 to calculate the required quantity Qad of the fuel that is required to be added or injected from the fuel injecting nozzle 19, to raise the temperature of the particulate filter 18 to the final target temperature Tf at which the process to recover the filter 18 from the S poisoning can be effected. This required quantity Qad of the fuel is calculated on the basis of the operating state of the engine 1.

Then, step S702 is executed to obtain the estimated amount Tu1 of temperature rise of the particulate filter 18 by adding the fuel in the required quantity Qad obtained in step S701.

The control process then proceeds to step S703 to obtain the desired amount Tu2 of temperature rise of the particulate filter 18, which is required to raise the temperature of the filter 18 to the instantaneous target temperature Ti by the fuel addition by means of the fuel injecting nozzle 19. The desired amount Tu2 of temperature rise is obtained by subtracting the difference (Tf - T1) from the estimated amount Tu1 of temperature rise due to addition of the fuel quantity Qad.

Step S704 is then executed to obtain the instantaneous temperature-rise parameter Qad', by multiplying the fuel quantity Qad by a ratio of the desired amount Tu2 of temperature rise (obtained in step S703) to the estimated amount Tu1 of temperature rise. The instantaneous temperature-rise parameter Qad' represents a currently required quantity of fuel that is to be added to raise the temperature to the instantaneous target temperature Ti.

Step S404 of Fig. 4 is followed by step S405 to determine whether the instantaneous target temperature Ti calculated in step S604 becomes equal to the final target temperature Tf. In other words, it is determined in step S405 whether the particulate matters have been completely burned out by repeated execution of step S406 which will be described. If an affirmative decision (YES) is obtained in step S405, the control process proceeds to step S407. If a negative decision (NO) is obtained in step S406, the control process proceeds to step S406.

In step S406, the temperature of the particulate filter 18 is raised for a predetermined period of time. Steps S405 and S406 are repeatedly executed until the affirmative decision (YES) is obtained in step S405, that is, until the instantaneous target temperature Ti becomes equal to the final target temperature Tf.

In step S407, the process to recover the NOx catalyst 17 from the S poisoning is performed on the assumption that the particulate matters have been completely burned out and no temperature rise of the filter 18 due to burning of the particulate matters takes place. Thus, the control routine of Fig. 4 is completed.

In the second embodiment, the recovery-process terminating means is activated to terminate or inhibit the process to recover the NOx catalyst 17 from the S poisoning when the particulate-amount detecting means determines that the amount of the accumulated particulate matters is larger than the predetermined threshold value. In this case, the particulate matters are removed by burning or oxidization, and then the S-poisoning recovery process is implemented by the S-poisoning recovery means, so that the particulate filter 18 is protected from thermal deterioration due to an excessive temperature rise of the exhaust gas by burning of an excessively large amount of the particulate matters.

It will be understood that the emission control system according to the principle of the present invention is arranged to remove the particulate matters accumulated on the catalyst-carrying particulate filter 18, before the process to recover the NOx catalyst 18 from the S poisoning at an elevated temperature, so that the particulate filter 18 is prevented from being thermally deteriorated due to a temperature rise by burning of the particulate matters such as soot during the S-poisoning recovery process.

An emission control system for an internal combustion engine (1) includes a filter that collects particulates contained in an exhaust gas, and carries an NOx absorbent (17) thereon, filter regenerating means (9) for regenerating the filter by removing the particulates accumulated on the filter, S-poisoning determining means (9) for determining whether the NOx absorbent is in a condition of S poisoning due to absorption of SOx contained in the exhaust gas, and S-poisoning recovery means (9) for recovering the NOx absorbent from S poisoning. In the emission control system, when the S-poisoning determining means determines that the NOx absorbent is in the condition of S poisoning, the filter regenerating means is activated to remove the particulates, and the S-poisoning recovery means is then activated to recover the NOx absorbent from S poisoning after removal of the particulates.

## Claims

1. An emission control system for an internal combustion engine (1), comprising:
a filter (18) that collects particulates contained in an exhaust gas, and carries an NOx absorbent (17) thereon, the NOx absorbent absorbing NOx contained in the exhaust gas when an air-fuel ratio of the exhaust gas is lean, and
releasing the absorbed NOx when an oxygen concentration of the exhaust gas is reduced;
filter regenerating means (9) for regenerating the filter by removing the particulates accumulated on the filter; S-poisoning determining means (9) for determining whether the NOx absorbent is in a condition of S-poisoning due to absorption of SOx contained in the exhaust gas, in addition to the NOx; and
temperature increase rate control means (9) for controlling a rate of increase of a temperature of the filter based on an amount of the particulates accumulated on the filter, when the S-poisoning determining means determines that the NOx absorbent is in the condition of S-poisoning.

2. An emission control system according to claim 1, wherein the temperature-increase-rate control means controls the rate of increase of the temperature of the filter such that the rate of increase is inversely proportional to the amount of the particulates accumulated on the filter.

3. A method for controlling an emission control system for an internal combustion engine (1), which includes a filter (18) that collects particulates contained in an exhaust gas, and carries an NOx absorbent (17) thereon, the NOx absorbent absorbing NOx contained in the exhaust gas when an air-fuel ratio of the exhaust gas is lean, and releasing the absorbed NOx when an oxygen concentration of the exhaust gas is reduced, comprising the steps of:
regenerating the filter by removing the particulates accumulated on the filter;
determining whether the NOx absorbent is in a condition of S-poisoning due to absorption of SOx contained in the exhaust gas, in addition to the NOx; and
controlling a rate of increase of a temperature of the filter based on an amount of the particulates accumulated on the filter, when it is determined that the NOx absorbent is in the condition of S-poisoning.

4. A method according to claim 3, wherein the rate of increase of the temperature of the filter is controlled such that the rate of increase is inversely proportional to the amount of the particulates accumulated on the filter.

## Patentansprüche

1. System zum Steuern der Emissionen einer Brennkraftmaschine (1), mit:
einem Filter (18), der in einem Abgas enthaltene Partikel sammelt und einen NOx-Absorber (17) auf sich trägt, wobei der NOx-Absorber in dem Abgas enthaltenes NOx absorbiert, wenn ein Luft-Kraftstoff-Verhältnis des Abgases mager ist, und das absorbierte NOx freigibt, wenn eine Sauerstoffkonzentration des Abgases reduziert ist;
einer Filterregenerationseinrichtung (9) zum Regenerieren des Filters durch das Entfernen der auf dem Filter angesammelten Partikel;
einer S-Vergiftungsbestimmungseinrichtung (9) zum Bestimmen, ob der NOx-Absorber sich wegen der Absorption von in dem Abgas zusätzlich zu dem NOx enthaltenen SOx in einem Zustand einer S-Vergiftung befindet; und
einer Temperaturanstiegsratensteuerungseinrichtung (9) zum Steuern einer Anstiegsrate einer Temperatur des Filters ausgehend von der Menge der auf dem Filter angesammelten Partikel, wenn die S-Vergiftungsbestimmungseinrichtung bestimmt, dass der NOx-Absorber sich in dem Zustand der S-Vergiftung befindet.

2. System zum Steuern der Emissionen nach Anspruch 1, wobei die Temperaturanstiegsratensteuerungseinrichtung die Rate des Anstiegs der Temperatur des Filters derart steuert, dass die Rate des Anstiegs verkehrt proportional zu der Menge der auf dem Filter angesammelten Partikel ist.

3. Verfahren zum Steuern eines Systems zum Steuern der Emissionen einer Brennkraftmaschine (1), das einen Filter (18) hat, der in einem Abgas enthaltene Partikel sammelt, und auf sich einen NOx-Absorber (17) trägt, wobei der NOx-Absorber in dem Abgas enthaltenes NOx absorbiert, wenn ein Kraftstoffluftverhältnis des Abgases mager ist, und das absorbierte NOx freigibt, wenn eine Sauerstoffkonzentration des Abgases reduziert ist, mit den Schritten:
Regenerieren des Filters durch das Entfernen der auf dem Filter angesammelten Partikel;
Bestimmen, ob der NOx-Absorber sich wegen der Absorption von in dem Abgas zusätzlich zu dem NOx enthaltenen SOx in einem Zustand einer S-Vergiftung befindet; und Steuern einer Erhöhungsrate einer Temperatur des Filter ausgehend von der Menge der auf dem Filter angesammelten Partikel, wenn bestimmt ist, dass der NOx-Absorber sich in dem Zustand der S-Vergiftung befindet.

4. Verfahren nach Anspruch 3, wobei die Rate der Temperaturerhöhung des Filters derart gesteuert wird, dass die Anstiegsrate verkehrt proportional zur Menge der an dem Filter angesammelten Partikel ist.

## Revendications

1. Système de commande d'émissions pour moteur à combustion interne (1), comprenant :
un filtre (18) qui collecte des particules contenues dans un gaz d'échappement et supporte un absorbant de NOx (17) dessus, l'absorbant de Nox absorbant les Nox contenus dans les gaz d'échappement lorsqu'un rapport air-carburant du gaz d'échappement est pauvre, et libérant les Nox absorbés lorsqu'une concentration en oxygène du gaz d'échappement est réduite ;
un moyen de régénération de filtre (9) pour régénérer le filtre en supprimant les particules accumulées sur le filtre ; un moyen de détermination d'empoisonnement au S (9) pour déterminer si l'absorbant de NOx est dans une condition d'empoisonnement au S en raison de l'absorption des SOx contenus dans le gaz d'échappement, en plus du NOx ; et
un moyen de commande de taux d'élévation de température (9) pour commander un taux d'élévation d'une température de filtre en fonction d'une quantité de particules accumulées sur le filtre, lorsque le moyen de détermination d'empoisonnement au S détermine que l'absorbant de NOx est dans la condition d'empoisonnement au S.

2. Système de commande d'émissions selon la revendication 1, dans lequel le moyen de commande de taux d'élévation de la température commande le taux d'élévation de la température du filtre de sorte que le taux d'élévation est inversement proportionnel à la quantité de particules accumulée sur le filtre.

3. Procédé pour commander un système de commande d'émissions pour un moteur à combustion interne (1), qui comprend un filtre (18) qui collecte des particules contenues dans un gaz d'échappement, et supporte un absorbant de NOx (17) dessus, l'absorbant de NOx absorbant les NOx contenus dans le gaz d'échappement lorsqu'un rapport air-carburant du gaz d'échappement est pauvre, et libérant le NOx absorbé lorsqu'une concentration en oxygène du gaz d'échappement est réduite, comprenant les étapes consistant à : régénérer le filtre en supprimant les particules accumulées sur le filtre ;
déterminer si l'absorbant de NOx est dans une condition d'empoisonnement au S en raison de l'absorption des SOx contenus dans le gaz d'échappement, en plus du NOx ; et commander un taux d'élévation d'une température du filtre en fonction d'une quantité de particules accumulée sur le filtre, lorsqu'il est déterminé que l'absorbant de NOx est dans une condition d'empoisonnement au S.

4. Procédé selon la revendication 3, dans lequel le taux d'élévation de la température du filtre est commandé de sorte que le taux d'élévation est inversement proportionnel à la quantité de particules accumulée sur le filtre.
